(19) Europäisches Patentamt
European Patent Office
Office européen des brevets

(11) **EP 2 983 063 A2**

(12) **EUROPEAN PATENT APPLICATION**

(43) Date of publication:
**10.02.2016 Bulletin 2016/06**

(51) Int Cl.:
**G06F 1/32** *(2006.01)* **G01S 15/52** *(2006.01)*
**H04M 1/60** *(2006.01)*

(21) Application number: **15177712.5**

(22) Date of filing: **21.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.08.2014 US 201414454110**

(71) Applicant: **NXP B.V.**
**5656 AG Eindhoven (NL)**

(72) Inventor: **DEROM, Koen**
**5656 AG Eindhoven (NL)**

(74) Representative: **Miles, John Richard**
**NXP Semiconductors**
**Intellectual Property and Licensing**
**Red Central**
**60 High Street**
**Redhill, Surrey RH1 1SH (GB)**

(54) **LOW-POWER ENVIRONMENT MONITORING AND ACTIVATION TRIGGERING FOR MOBILE DEVICES THROUGH ULTRASOUND ECHO ANALYSIS**

(57) Systems and methods are disclosed that provide for low-power monitoring of the acoustic echo path around a device to enable device triggering based on activity detection in the environment. An ultrasonic (or more generally an acoustic) reference signal is played through a speaker at well-chosen intervals and its echoes recorded through a microphone. The recorded signal is analyzed to obtain an estimation of the total echo path or echo energy. By monitoring this estimation variation, significant changes in the echo path or echo energy can be identified and used as a trigger. In one embodiment, a hand approaching a phone changes the echo path, activating the phone to a power on mode. In another embodiment, a user using a phone close to the ear changes the echo energy, triggering the phone to select the "ear-fit" mode speaker/microphone.

1400

FIG. 14

EP 2 983 063 A2

## Description

FIELD

The described embodiments relate generally to methods and systems that provide for low-power environment monitoring and activation triggering, and more particularly to methods and systems that provide for low-power environment monitoring and activation triggering for mobile devices through ultrasound echo analysis.

BACKGROUND

For mobile and wearable devices, a power-on/wake-up button can be useful for activating the device. However, such a power-on/wake-up button on the device can be small and/or difficult to find. Further, on smaller wearable devices, there may not be sufficient room to locate such a power-on/wake-up button at a location which is sufficiently robust against accidental activation.

Additionally, there is a desire to develop methods and systems that use components (e.g., speaker/microphone) already present in many existing mobile and wearable devices. There is also a desire that such methods and systems can make some other components (such as proximity sensor) obsolete. These methods and systems can provide the benefits of smaller sized devices that contain fewer components. These smaller sized devices with fewer components can cost less and be easier to use.

Further, there is also a desire to develop methods and systems that use an intuitive and natural user interface, instead of a physical user interface, such as a power-on/wake-up button. As an example of such an intuitive and natural user interface, picking up a device can be a clear indication that a user wants to activate a device, and as such be used for activating the device.

For mobile and wearable devices, there is also a need to develop low power solutions that conserve power and prolong battery life. The low power solution can be especially important if the solution involves frequent or continuous monitoring of the device environment.

As such, it is desirable to have methods and systems that provide for low-power environment monitoring and activation triggering for mobile devices through ultrasound echo analysis.

SUMMARY

This specification discloses systems and methods for monitoring the acoustic echo path around a device to enable device triggering based on activity detection in the environment. In one embodiment, a specific ultrasonic (or more generally an acoustic) reference signal is played through a speaker at well-chosen intervals and its echoes recorded through a microphone. The recorded signal is analyzed to obtain an estimation of the total echo path. By monitoring this estimation variation, significant changes in the echo path can be identified (and separated from smaller noise-induced random variations) and used as a trigger (e.g., trigger for system activation).

In one embodiment, the disclosed system has both power consumption and reaction speed advantages over the more traditional adaptive-filtering based techniques for echo path estimation. This enables the use of this approach for "always-on" monitoring of the environment. In one embodiment, the system is capable of automatically assessing the stable state of the environment and rapidly adapting to a new state. Significant and sudden changes to this environment can be used as a trigger to immediately fully activate the system or to activate a next step in a bootstrap procedure involving consecutive steps, each of which gives a more reliable indication that activation is required. Robustness to noise and interference can be easily built in by noise/interference measurements at well-chosen locations in the time/frequency space.

In another embodiment, this specification also discloses systems and methods which monitor the acoustic echo path around a device to enable speaker switching based on ear-fit/hands-free mode detection. By analyzing the total speaker-to-microphone echo path and by characterizing the direct echo (internal acoustical coupling and/or electrical cross-talk), the acoustic echo between speaker and microphone can be isolated.

The disclosed system then classifies the acoustic echo based on the echo energy to discriminate hands-free mode from "ear-fit" mode, and activates the appropriate speaker (and microphones) for that mode. Optionally, screen activation also can be controlled such that the system provides all functionality offered by proximity sensors today, using already available components.

As an extension, quality of ear-fit measurement can be used to control volume and/or adaptive sound equalization to deliver a constant acoustic loudness and quality perception to the user.

In one embodiment, a method that uses acoustic echo to trigger a device is disclosed. The method includes transmitting an acoustic reference signal through a speaker at selected intervals, receiving an echo of the acoustic reference signal through a microphone, analyzing the echo of the acoustic reference signal to determine an echo path or an echo energy, monitoring for changes in the echo path or the echo energy, and, in response to identifying a significant change in the echo path or the echo energy, sending a control signal to trigger the device. In one embodiment, the acoustic reference signal is an ultrasonic reference signal. In one embodiment, the control signal triggers the device to make a switch in a power level of the device. In one embodiment, the significant change in the echo path is associated with a body part of a user moving relative to the device. In one embodiment, triggering the device to make the switch in the power level of the device includes triggering the device to switch from a low power mode to a high power mode. In one embodiment, the low power mode is a "device off" state or a power saving standby state, and the high power mode is a "device on" state or a high power state that has more functionalities turned on. In one embodiment, the ultrasonic reference signal is a reference pulse with good autocorrelation properties. In one embodiment, the reference pulse with good autocorrelation properties is optimally detectable in noise when the reference pulse is a low power pulse. In one embodiment, the step of analyzing the echo of the acoustic reference signal to determine the echo path or the echo energy is optimized by adjusting one or more of the following parameters: pulse duration, pulse frequency bandwidth, pulse loudness, listening window, and pulse interval. In one embodiment, an expected timing of the echo is used to determine an optimized listening window and pulse interval. In one embodiment, the control signal triggers the device to make an automatic speaker/microphone selection and control based on the identified significant change in the echo energy. In one embodiment, the identified significant change in the echo energy indicates a low echo energy that is associated with the device being far away from a user's ear which may be for example a distance of greater than 5 centimeters so that this is a "handsfree" mode and the device automatically switches to using a "hands-free" speaker/microphone selection and control. In one embodiment, the identified significant change in the echo energy indicates a high echo energy that is associated with the device being close to a user's ear which may be for example a distance of greater less than 1 centimeter so that this is an "ear-fit" mode and the device automatically switches to using an "ear-fit" speaker/microphone selection and control. In one embodiment, the reference pulse is sent in a unique and/or randomized sequence to allow different devices to coexist, and the device only reacts to pulses the device identifies as its own. In one embodiment, the significant change is identified through an automatic dynamic threshold calculation.

In one embodiment, an apparatus that uses acoustic echo to trigger a device is disclosed. The apparatus includes an output configured for transmitting an acoustic reference signal at selected intervals by coupling to a speaker, an input configured for receiving an echo of the acoustic reference signal by coupling to a microphone, and a processor. The processor is configured for analyzing the echo of the acoustic reference signal to determine an echo path or an echo energy, monitoring for changes in the echo path or the echo energy, and, in response to identifying a significant change in the echo path or the echo energy, sending a control signal to trigger the device. In one embodiment, the acoustic reference signal is an ultrasonic reference signal. In one embodiment, the control signal triggers the device to make a switch in a power level of the device based on the identified significant change in the echo path. In one embodiment, the control signal triggers the device to make an automatic speaker/microphone selection and control based on the identified significant change in the echo energy.

In one embodiment, a computer program product encoded in a non-transitory computer readable medium for using ultrasonic echo to trigger a device is disclosed. The computer program product includes computer code for transmitting an ultrasonic reference signal through a speaker at selected intervals, computer code for receiving an echo of the ultrasonic reference signal through a microphone, computer code for analyzing the echo of the ultrasonic reference signal to determine an echo path or an echo energy, computer code for monitoring for changes in the echo path or the echo energy, and computer code for, in response to identifying a significant change in the echo path or the echo energy, sending a control signal to trigger the device.

The above summary is not intended to represent every example embodiment within the scope of the current or future Claim sets. Additional example embodiments are discussed within the Figures and Detailed Description below.

BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.

FIG. 1A shows a mobile phone that can be activated through nearby motion, in accordance with some example embodiments.

FIG. 1B shows how the mobile phone shown in FIG. 1A can transmit acoustic signals and receive echoes of the acoustic signals, in accordance with some example embodiments.

FIG. 1C shows how the mobile phone shown in FIG. 1B can be activated through nearby motion using acoustic echo analysis, in accordance with some example embodiments.

FIG. 2 shows an acoustic sine sweep that can be used as a reference signal, in accordance with some example embodiments.

FIG. 3 shows that a generated ultrasonic pulse can be combined with an audible sound for transmission via a speaker, in accordance with some example embodiments.

FIG. 4 shows how ultrasonic reference pulses can be transmitted at a certain interval, duration, and loudness, in accordance with some example embodiments.

FIG. 5 shows how a received (or recorded) signal through a microphone can include multiple reflections and noise, in accordance with some example embodiments.

FIG. 6 shows how echo path analysis can be used for activation triggering, in accordance with some example embodiments.

FIG. 7 shows pulse autocorrelation, autocorrelation amplitude envelope, and matched filtering, in accordance with some example embodiments.

FIG. 8 shows how an adaptive threshold can be used to detect significant change in the echo path, in accordance with some example embodiments.

FIG. 9A shows a normalized amplitude spectrum of chirp signal, in accordance with some example embodiments.

FIG. 9B shows a magnitude response of corresponding matched filter for the normalized amplitude spectrum shown in FIG. 9A, in accordance with some example embodiments.

FIG. 10 shows that interference measurements just outside of the echo window in the time/frequency plane can be used to detect unwanted interferences, in accordance with some example embodiments.

FIG. 11A shows a mobile phone using a receiver speaker when held near to the ear (i.e., "ear-fit" mode), in accordance with some example embodiments.

FIG. 11B shows a mobile phone using a hands-free speaker (higher output power) when held far from the ear (i.e., hands-free mode), in accordance with some example embodiments.

FIG. 12 shows a typical smartphone speaker and microphone placements and naming, in accordance with some example embodiments.

FIG. 13 shows the echo energy based 'ear-fit' classification for collocated (receiver) speaker and microphone, in accordance with some example embodiments.

FIG. 14 shows a flow chart of method steps that uses acoustic echo to trigger a device, in accordance with some example embodiments.

DETAILED DESCRIPTION

Representative applications of methods and apparatus according to the present application are described in this section. These examples are being provided solely to add context and aid in the understanding of the described embodiments. It will thus be apparent to one skilled in the art that the described embodiments may be practiced without some or all of these specific details. In other instances, well known process steps have not been described in detail in order to avoid unnecessarily obscuring the described embodiments. Other applications are possible, such that the following examples should not be taken as limiting.

In the following detailed description, references are made to the accompanying drawings, which form a part of the description and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the spirit and scope of the described embodiments.

In one embodiment, the system disclosed in this specification is one of the possible trigger sources in a 'trigger hub' concept. A trigger hub is conceived as an always-on system in mobile and wearable devices which constantly monitors different trigger sources for activating a device and/or putting it in a higher power consumption stage, which allows for more complex monitoring activities. This leads to a system which automatically detects that it will be used and prepares itself for such use by enabling more advanced user interfaces (such as touch screen, voice control, secure unlock, etc.).

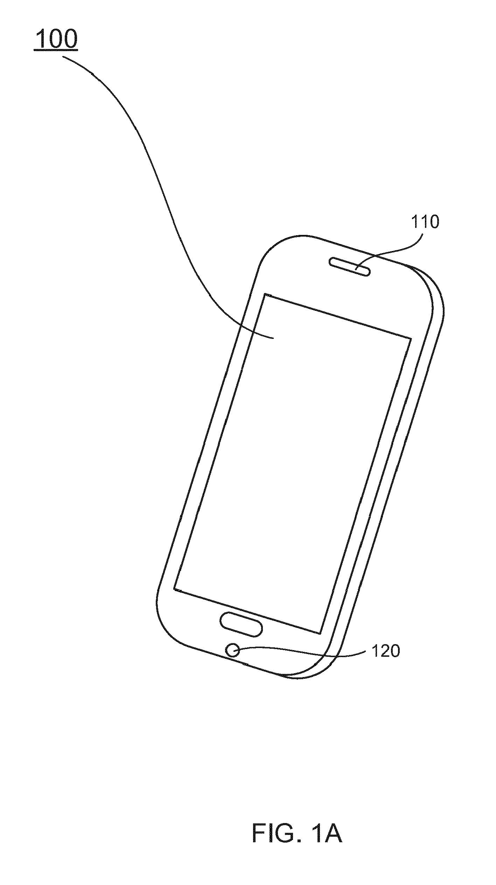

In one embodiment, the disclosed system can allow an available speaker/microphone combination to be used to detect motion at a predefined distance range around the device. The system can constantly measure the steady-state echo path around the device, and identify significant changes in the echo path (reflecting objects moving around the device) to trigger a next power stage, as illustrated in FIGS. 1A-1C, where a mobile phone is activated by bringing a hand in the vicinity of the phone.

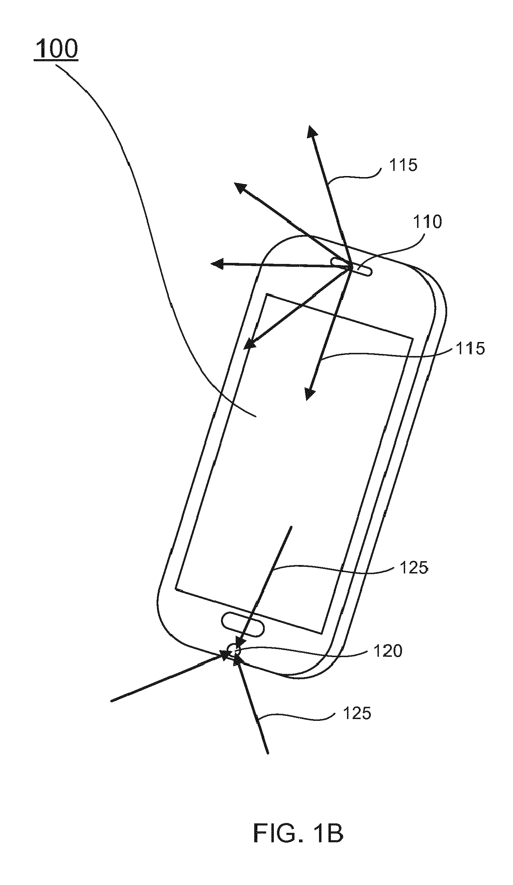

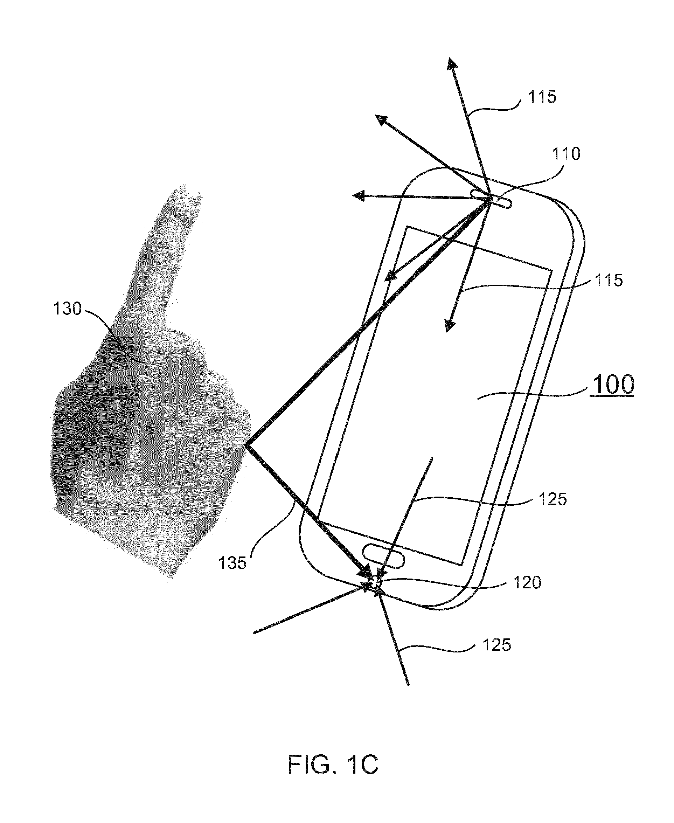

FIG. 1A shows a mobile phone 100 that can be activated through nearby motion, in accordance with some example embodiments. FIG. 1A shows that mobile phone 100 can include a speaker 110 and a microphone 120. FIG. 1B shows how the mobile phone 100 shown in FIG. 1A can transmit acoustic signals 115 and receive echoes 125 of the acoustic signals, in accordance with some example embodiments. In particular, FIG. 1B shows that the speaker 110 can be used to transmit a specific ultrasonic (or more generally an acoustic) reference signal 115, while the microphone 120 can be used to receive one or more echoes 125 of the reference signal 115. In one embodiment, the microphone 120 can be used to further record the one or more echoes 125 that have been received. FIG. 1C shows how the mobile phone 100 shown in FIG. 1B can be activated through nearby motion using acoustic echo analysis, in accordance with some example embodiments. In particular, FIG. 1C shows that the nearby motion a body part 130 of a user, such as a hand or head or body, can be used to activate the mobile phone 100. By moving relative to the mobile phone 100, the body part 130 of the user can create echo 135, which is then used for detecting the presence or motion of the body part 130. In one embodiment, echo 135 can indicate that the body part 130 is moving closer to or further from the mobile phone 100. In another embodiment, echo 135 can indicate that the body part 130 is moving faster or slower relative to the mobile phone 100. In other embodiment, echo 135 can indicate that the body part 130 is moving both closer and faster to the mobile phone 100, or closer and slower to the mobile phone 100, or any other possible combinations.

FIG. 1C shows how the mobile phone 100 shown in FIG. 1B can be activated through nearby motion using acoustic echo analysis, in accordance with some example embodiments. Activation of the mobile phone 100 in this context can mean a number of different things. For example, activation of the mobile phone 100 may include:

(1) Full switch on of the system, ready for immediate use;
(2) Next phase in an activation bootstrap procedure (e.g., camera-based activation, voice recognition activation, etc.);
(3) Enter a secure unlock stage using the same elements in a higher-power consumption mode, (e.g., based on gesture recognition);
(4) Powering on more advanced (and power hungry) user interfaces (screen, voice control, etc.); and
(5) Limited functionality enabled (e.g., showing an agenda application, or indicating current time, etc.).

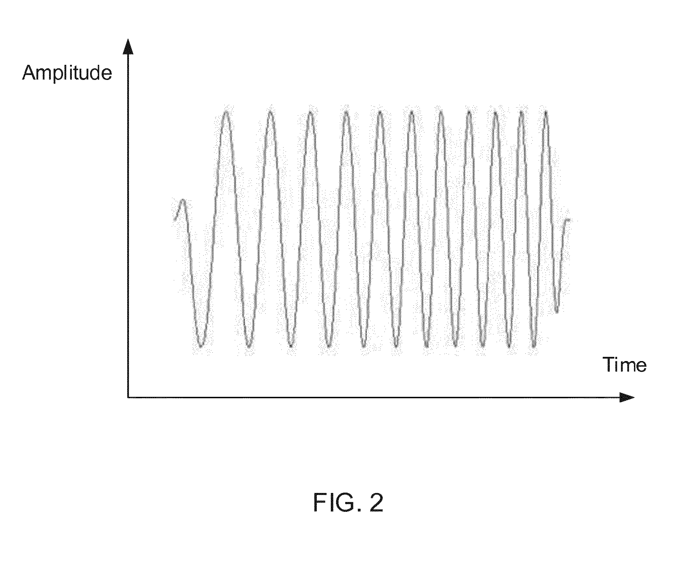

The speaker of a mobile or wearable device can be used to transmit an acoustic reference signal. In general, a well-chosen acoustic reference signal can be generated, which has good autocorrelation properties (i.e., which is easily detectable in noise, even when the reference signal is at low power). In one embodiment, these are typical signals which can also be used as frame synchronization words in (data) communication systems. As an example, a sine sweep (chirp) waveform can be used, but other sequences (such as a constant amplitude zero auto correlation (CAZAC) waveform, maximum length sequences, or white noise) can also be used as well. CAZAC can enable efficient correlation calculation in hardware, while white noise has perfect autocorrelation properties. FIG. 2 shows a sine sweep (chirp) waveform signal, which can be used as acoustic reference signal. Unless otherwise specified, the rest of this disclosure will assume a sine sweep is used.

In one embodiment, the acoustic reference signal can be an audible reference signal. In another embodiment, the acoustic reference signal can be an inaudible reference signal, such as an ultrasonic reference signal. Because typical speakers and microphones have a better signal-to-noise performance for audible frequencies, an audible reference signal is probably able to achieve better performance. However, an audible reference signal can interfere with other audible signals (such as a phone conversation which is being transmitted by a mobile or wearable device) and be heard by the user. Therefore, an ultrasonic reference signal may be preferred. As such, the rest of the disclosure assumes the sound pulses are in the ultrasonic range. However, the acoustic reference signal does not have to be inaudible and/or ultrasonic.

An acoustic reference signal can be made inaudible by implementing the following:

(1) Generating or playing it as an ultrasonic reference signal, which means generating or playing it at frequencies inaudible for the human hearing range (i.e., typically frequencies > 20 kHz).
(2) Time-windowing the signal (e.g., a hamming window), since this will reduce the audible on/off switching of the amplifier/speaker due to the ultrasonic pulses.
(3) Frequency filtering the signal: Some signals (e.g., white noise) may have a frequency content which overlaps with the human hearing range (i.e., they will be audible when played from a speaker). Therefore, high-pass filtering above 20 kHz may be done to make them inaudible for humans, if that is desired. For certain reference signals, frequency filtering will reduce the autocorrelation properties of the reference signals (e.g., bandpass noise no longer has perfect autocorrelation properties).

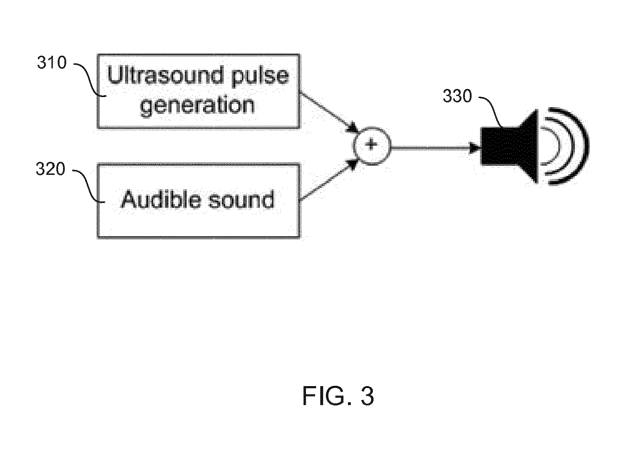

In some embodiments, the ultrasonic reference signal is added to the speaker signal, which can be playing 'normal' audio at the same time. In other words, the speaker can still be used in the 'normal' operation mode, while implementing the described disclosure. Accordingly, FIG. 3 shows that a generated ultrasonic pulse 310 can be combined with an audible sound 320 for transmission through a speaker 330, in accordance with some example embodiments

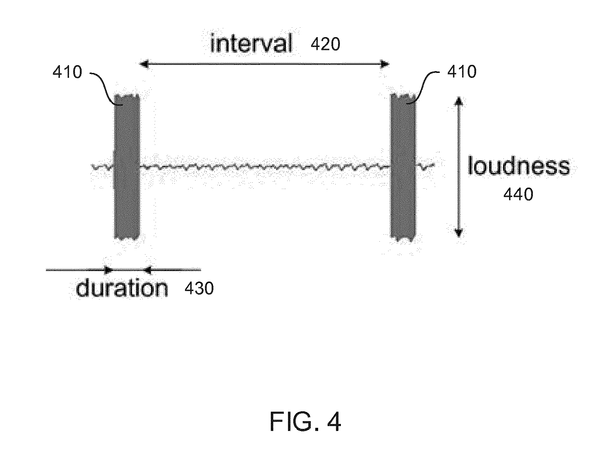

The ultrasonic reference signal can be generated as ultrasonic reference pulses, which are repeated at a certain interval, as determined by a performance and power trade-off that will described later. This performance and power trade-off considers one or more of the following parameters: pulse duration, pulse frequency bandwidth, pulse loudness, listening window, and pulse interval. Accordingly, FIG. 4 shows how ultrasonic reference pulses 410 (with duration 430 and loudness 440) can be transmitted at a certain interval 420, duration 430, and loudness 440, in accordance with some example embodiments. In one embodiment, the interval 420 between consecutive pulses is fixed. However, this is not a fixed requirement for the disclosed system to work. The disclosed system only relies on a constant delay throughout the audio path between the transmitted acoustic reference signal (or playback of the acoustic reference signal) and the received echo (or recording of the echo). This constant delay through the system audio path allows any change in echo delay and/or amplitude to be attributed to the changing environment.

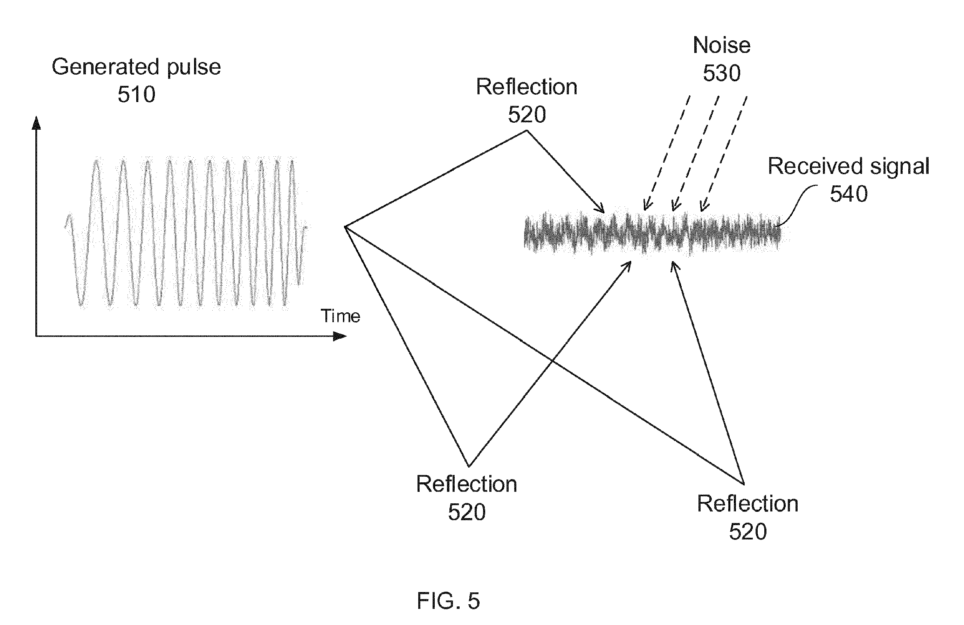

The signal received by the microphone consists of multiple time-delayed reflections of the pulse signal as well as noise (which in this context is any audible and non-audible signal picked up from the environment by the microphone, which is not a result of the emitted ultrasound pulse, as well as non-acoustic electronics noise in the system). Apart from 'external' reflections (i.e.,

sound reference produced by the speaker, reflected to nearby surfaces and picked up by the microphone), internal coupling between speaker and microphone within the system may exist as well (e.g., due to electrical crosstalk between speaker and microphone lines, or due to internal acoustical/mechanical coupling between speaker and microphone in the system). Accordingly, FIG. 5 shows how a received signal 540 through a microphone can include multiple reflections 520 and noise 530, where the generated pulse 510 was transmitted.

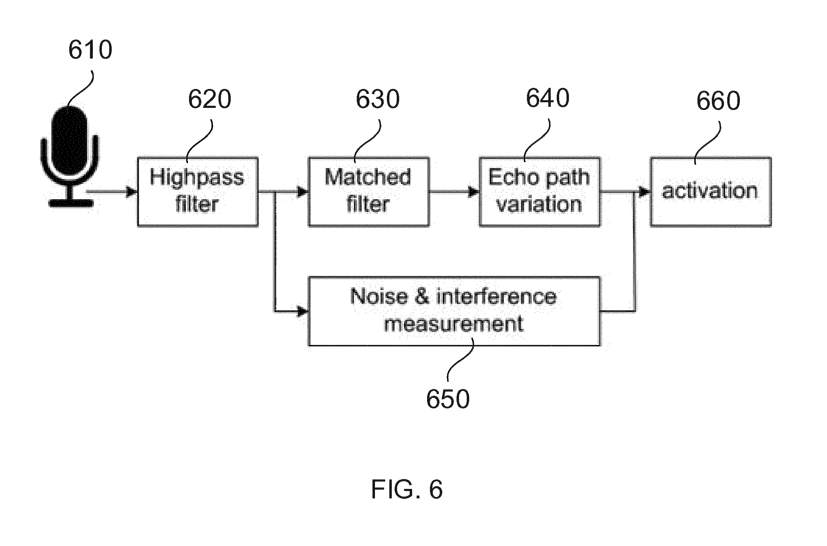

FIG. 6 shows how echo path analysis can be used for activation triggering, in accordance with some example embodiments. The signal received by microphone 610 is an ultrasonic pulse, which fades in and out to filter out audible artefacts. Then this received (or recorded) signal is processed by a highpass (or bandpass) filter 620 to isolate relevant ultrasonic content. Next, a matched filter 630 detects the pulse echoes in the presence of noise. Then echo path variation is determined in step 640. Meanwhile, the noise and interference measurement 650 can mask false positives. Finally, in step 660, activation of a device is based on the echo path variation.

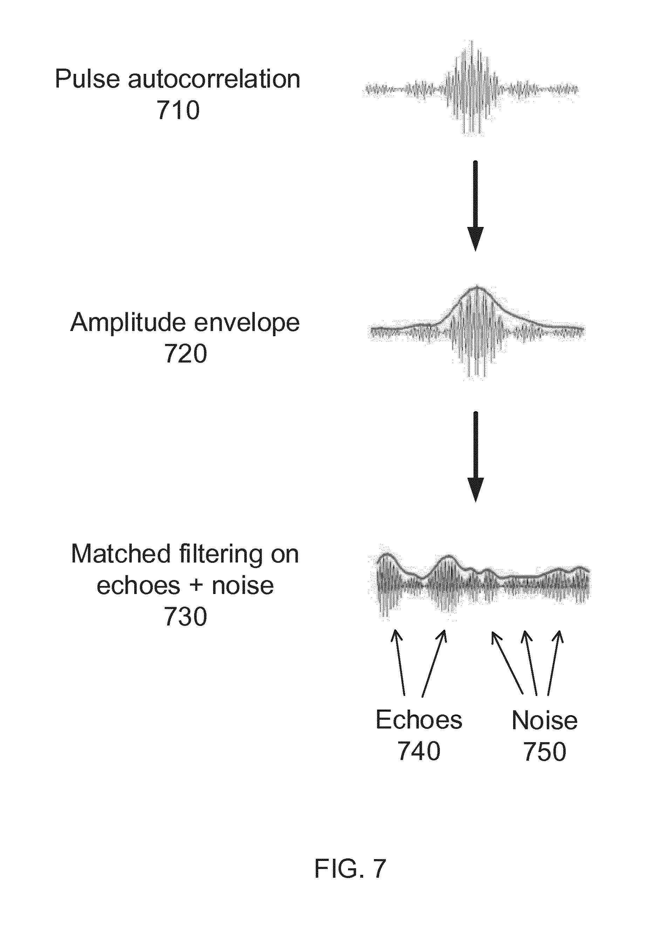

More details regarding the matched filter step 630 are shown in FIG. 7. First, the received (or recorded) signal is analyzed by calculating the cross-correlation with the known reference signal. The results are shown as pulse autocorrelation (710) in FIG. 7. Next, amplitude envelope detection of the cross-correlated signal is done (through a rectification and low pass filtering step), resulting in a clean (non-noisy) analysis signal which is interpreted as an estimation of the total echo path between speaker and microphone. These are shown in FIG. 7 as 'amplitude envelope' (720) and 'matched filtering on echoes + noise' (730). As such, the amplitude envelope detection may be considered as a sort of feature compression technique, such as those used in machine learning approaches: it allows the further calculations to focus on the essential features (echo peak location and amplitude), while filtering out features less relevant for the algorithm (high frequency variation in cross-correlation signal, side lobes of cross-correlation).

Since the systematic audio path delay between generated (or transmitted) pulse and recorded (or received) signal is (assumed to be) constant, the time delay between playback of the reference pulse and recording of a reflection at a certain distance can be calculated (based on distance of the reflecting surface and speed of sound through air). Based on the desired distance of movement detection, one can therefore calculate a time interval during which the recorded signal must be analyzed to identify all relevant reflections (i.e., to estimate the required part of the acoustic echo path).

Limiting the analysis of the recorded signal to a defined time window, allows for reducing the average processing power requirements for the algorithm: all time between two relevant recording periods can be used to execute all computations needed to do the analysis. Doing so, an acoustic echo path estimate is calculated for each pulse played back on the speaker.

By comparing the consecutive echo path estimations, changes in the environment can be detected. As an example of comparing the consecutive estimates, one can just look at the total difference between two measurements:

$$\mathrm{delta}(i) = \mathrm{sum}(\mathrm{abs}(\mathrm{echo}(i, :) - \mathrm{echo}(i\text{-}1, :))$$

where echo(i, :) is the vector representation of the $i^{th}$ echo estimate. Based on consecutive delta measurements, one can then calculate a dynamic threshold to separate small, random variations (due to noise picked up by various elements in the system) from significant (bigger) changes due to an actual change in the echo path, e.g.

$$T(i) = (1\text{-}\alpha) * T(i\text{-}1) + \alpha * \mathrm{gain} * \mathrm{delta}(i)$$

Every time delta(i) is bigger than T(i-1), a significant change in echo is detected. $\alpha$ and gain are parameters which determine the filtering characteristic of the adaptive threshold calculation and the ratio between magnitude of normal and significant echo changes (delta(i)'s).

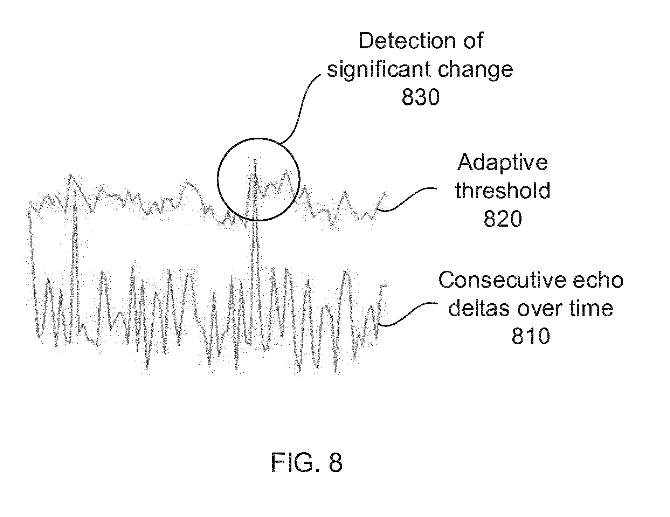

FIG. 8 shows how an adaptive threshold described above can be used to detect significant change in the echo path, in accordance with some example embodiments. The data line 810 represents consecutive echo path deltas over time. The data line 820 represents the adaptive threshold described above. When the consecutive echo path deltas over time exceeds the adaptive threshold (i.e., data line 810 exceeds data line 820), it can be determined that a significant change has occurred (i.e., detection of a significant change). Accordingly, in FIG. 8, the detection of a significant change is highlighted by the circle associated with 830.

By only considering changes in the echo path estimation as sources for activation triggering, the system becomes independent of static echoes in the system, caused by internal acoustic coupling or electrical crosstalk between the speaker and microphone part of the system. Even static echoes which are significantly bigger than wanted acoustic echo due to reflection can be filtered out by focusing on differences between consecutive measurements.

The dynamic threshold computation described above allows a system to be used without any system-dependent threshold tuning. A system implementing the invention is put in low-power mode (either by explicit user action or through time-out based on an extended period without user interaction) and starts calculating echo path estimates. After a certain period (determined by the $\alpha$ parameter in above equation), a sufficiently stable dynamic threshold is achieved, which can then be used to trigger activation once a sufficiently large delta compared to previous changes is detected. 'Sufficiently large' is hereby mainly determined by the gain parameter in above equation.

As an alternative to the delta and adaptive threshold calculation described above, more complex comparisons can be considered for identification of significant changes in the echo path. For example, by detection of relevant peaks in the amplitude envelope (representing distinct echo locations), one can detect a change in echo path if an echo peak (dis)appears from one measurement to the next.

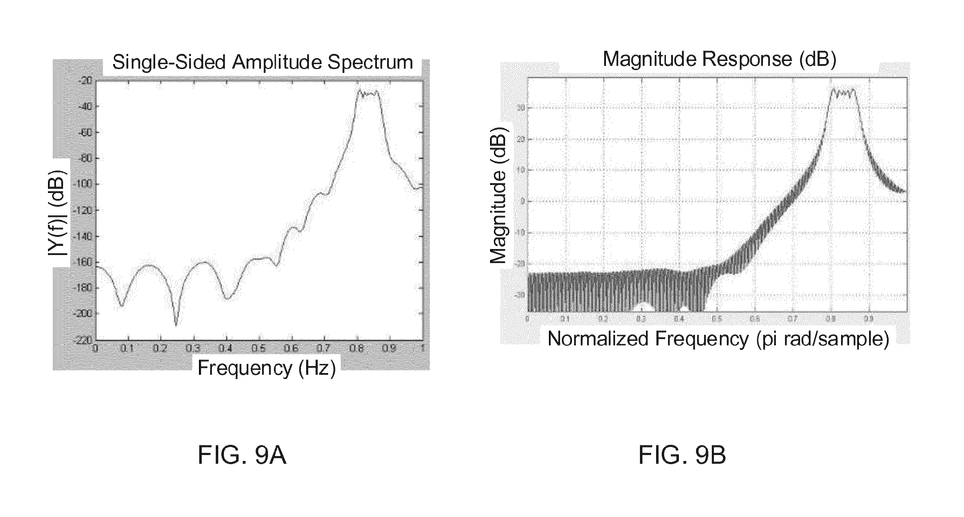

The cross-correlation used to identify reference pulse echoes in the recorded signal, can also be considered as matched filtering, where a signal is filtered by a filter which has the sample values of a reference/known signal as its filter coefficients. Such a matched filter has a frequency characteristic corresponding to the frequency content of the original signal. Therefore, a matched filter constructed from a band-limited chirp signal, behaves as a band-pass filter, as shown in FIGS. 9A and 9B. Accordingly, FIG. 9A shows a normalized amplitude spectrum of chirp signal, while FIG. 9B shows a magnitude response of corresponding matched filter for the normalized amplitude spectrum shown in FIG. 9A.

When interpreting the cross-correlation calculation as a bandpass filtering operation, it is clear that any interference source included in the recording which contains energy in the passband of the filter (e.g., very noisy signals ("Ssshht!"), impulse like signals (doors slamming shut, hand claps, picking up a keychain, etc.), will yield an important 'contribution' to the echo estimate. This means that, when from one echo path estimate to the next, an interferer adds energy in that passband, this interferer will be interpreted as a significant change in the echo path and therefore cause an activation trigger in the system, if no countermeasures are taken.

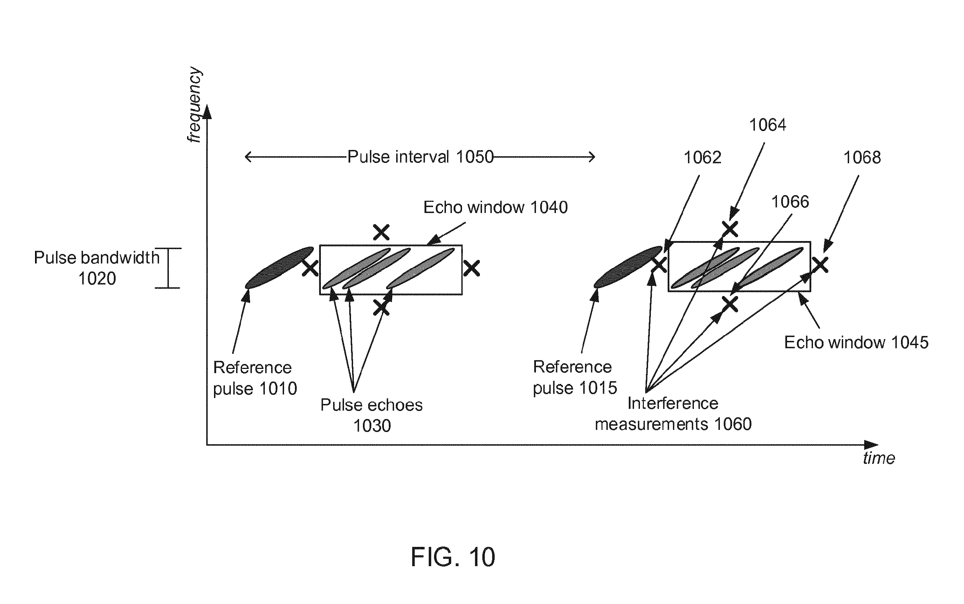

By monitoring energy in the recorded signal, not only in the time window of interest (as determined by the fixed audio delay in the system and the distance at which motion detection is desired), but also just before the earliest echo is expected, an interferer may be intercepted, since it would typically not be time synchronized with the reference pulse playback. Similarly, one can also monitor adjacent frequencies within the time window of interest, as many interferers will not only generate energy in the passband frequencies, but also at higher and lower frequencies. Lastly, an additional observation point may be chosen later than the latest expected echo (which still has sufficient energy to be detected). Note however that taking this measurement along in the decision making may increase response time in the system. FIG. 10 displays four such examples of interference measurement points (i.e., 1060) in the time/frequency plane, which can be used to detect unwanted interferences. Specifically, interference measurement point 1062 is associated with an observation point that monitors energy in the recorded signal just before the earliest echo is expected. Interference measurement point 1064 is associated with an observation point that monitors energy in the recorded signal at a higher frequency than the passband frequencies. Interference measurement point 1066 is associated with an observation point that monitors energy in the recorded signal at a lower frequency than the passband frequencies. Interference measurement point 1068 is associated with an observation point that monitors energy in the recorded signal at a time later than the latest expected echo.

In particular, FIG. 10 shows that interference measurements just outside of (but close to) the echo window in the time/frequency plane can be used to detect unwanted interferences, in accordance with some example embodiments. Then, when unwanted interference is detected (i.e., significant sudden increase in energy at the interference measurement points indicated), this can be used to reject false positives (i.e., apparent sudden changes in echo path, which are actually caused by the identified unwanted interference). In FIG. 10, playback (or transmitted) reference pulse 1010 (with a pulse bandwidth 1020) can result in recorded (or received) pulse echoes 1030 that are received in an echo window 1040. The playback (or transmitted) reference pulse 1010 is generated with a pulse interval 1050, so a second playback (or transmitted) reference pulse 1015 is seen after the pulse interval 1050. Accordingly, there is a second set of recorded (or received) pulse echoes and a second echo window 1045 associated with the second playback (or transmitted) reference pulse 1015. A second set of interference measurement points 1060 (or more specifically interference measurement points 1062, 1064, 1066, and 1068) is denoted by crosses, and can be used to detect unwanted interferences associated with the second set of recorded (or received) pulse echoes and the second echo window 1045. Please note that FIG. 10 also shows a first set of interference measurement points (also denoted by crosses, but left unlabeled) that can be used to detect unwanted interferences associated with the first set of recorded (or received) pulse echoes 1030 and the first echo window 1040.

At the measurement points, energy/interference detection can be done in many different ways. For example, energy/interference detection can be done:

> (1) by calculating a specific coefficient of the fast Fourier transform (fft) of the signal around the measurement point using the Goertzel algorithm.
> (2) by measuring maximum amplitude or sum absolute values of a signal obtained by band-pass filtering the signal around the measurement point.

Interference detection based on the measurement points indicated in FIG. 10, can be done in a very similar way as the original change detection. By continuously monitoring the energy at the measurement points, one can calculate a dynamic threshold (for each point) above which an interferer is assumed to have appeared.

If such an interferer is detected during a certain measurement, this information can be used to 'mask' a potential echo path change trigger at the same time (i.e., a significant echo path variation is considered invalid if an interferer trigger happens during the same measurement).

Using the system and method disclosed in FIGS. 1-10 (i.e., activating a mobile or wearable device through nearby motion using acoustic echo analysis) can save a user from the need of a small and/or difficult to find power button on the device. Also, on smaller wearable devices, there may not be sufficient room to locate such a power-on/wake-up button at a location which is sufficiently robust against accidental activation. Further, the echo path estimation that can be used such as a system allows for low power operation, when comparing to more traditional echo estimation based on adaptive filtering. The low power operation is very helpful for conserving power and prolonging battery life in mobile and wearable devices. The solution also allows for a very straightforward trade-off between power consumption and responsiveness.

In the system and method disclosed in FIGS. 1-10 (i.e., activating a mobile or wearable device through nearby motion using acoustic echo analysis), no manual training/tuning towards a specific application is needed. The system and method can constantly monitor the environment and dynamically calculate a threshold to determine which echo path changes are relevant. The system and method also can use components (e.g., speaker/microphone) already present in many existing mobile and wearable devices, and even make some other components (proximity sensor) obsolete. The system and method can provide the benefits of smaller sized devices that contain fewer components. These smaller sized devices with fewer components can cost less and be easier to use. The system and method described also have the advantage of using an intuitive and natural user interface, instead of a physical user interface (such as a power-on/wake-up button). As an example of such an intuitive and natural user interface, picking up a device can be a clear indication that a user wants to activate a device, and as such be used as a means for activating the device.

The disclosed system and method use well-chosen reference pulses, which have very good autocorrelation properties (i.e., they are optimally detectable in (white Gaussian) noise, using the 'matched filtering' technique). Since each echo results in a very sharp peak in the correlation signal, each echo is individually identifiable and each additional echo (due to new objects appearing/disappearing in the environment of the device) will result in clear changes in the echo path estimate.

The disclosed system and method allow for a very straightforward power and performance tradeoff. By adjusting for five essential parameters in the system, one can achieve very fine-grained performance tuning of the system:

(1) Pulse duration: the longer the reference pulse, the better its echo will be detectable in noise, but the more speaker power and processing time (autocorrelation calculation) it will require.

(2) Pulse frequency bandwidth: the wider the frequency bandwidth of the signal, the sharper its autocorrelation will be. It will also be more robust against frequency-dependent attenuation (either in the speaker/microphone itself or due to multipath propagation effects).

(3) Pulse loudness: the louder the pulse, the easier it can be detected and the bigger the potential range of detection becomes. However, a louder pulse also results in higher power consumption in the amplifier.

(4) Listening window: A longer listening window allows for a longer distance for detecting the echoes, but it will also require more processing power to calculate the correlation/matched filtering over a longer period of time.

(5) Pulse interval: A short pulse interval (time between two consecutive pulses) will allow for fast responsiveness of the system, but it will also require a higher average amplifier power and calculation requirements. A bigger interval will reduce power and computer processing requirements, but it will also yield longer times before motion/echo path change is detected.

As for interference robustness, based on the desired detection range, the 'location' of the expected echo is well known in the time-frequency plane. Therefore, additional sensing can be done outside of the region of interest (i.e., before/after the expected echo and/or at higher/lower frequencies) to check for interference. If a significant increase in energy is detected, which cannot be attributed to an echo of the sent-out reference pulse, this interference/noise can be disregarded as an activity trigger.

The disclosed system and method can be applied to mobile and wearable devices, in the context of activating them without the need to physically touch or move them. For these devices a low-power short-range implementation of the disclosure can be used.

The concepts of this disclosure can however be generalized to other systems where activity detection is desired. When increasing the power of the speaker and/or sensitivity of the microphone, and allowing for a longer echo window, one can use the concepts in this disclosure to build other ultrasonic "activity detector", such as an ultrasonic burglar alarm, which can be less sensitive to orientation as compared to an IR (infrared) based break-in detectors.

This disclosure is mostly focused on one microphone and one speaker. However, the concepts described in this disclosure can be generalized and potentially made more robust through the use of multiple speakers and/or multiple microphones. Note that it can even be possible to use only one speaker, in which case the one speaker can then be used both as a speaker and as a microphone at the same time.

To allow multiple devices implementing the disclosure to correctly operate while being close to each other (i.e., close enough for reference pulses emitted by one system to be picked up by an adjacent one), one can, for example, randomize the interval between pulses on each system, or use (a sequence of) unique reference pulses on different systems. A system can then only react to multiple synchronized echoes (i.e., the echoes from pulses it has emitted) or on pulses identified as its own. In other words, a system can generate a set of different (or same) pulses, and then transmit the set of pulses out in a unique and/or randomized sequence. Since the system knows the unique and/or randomized sequence, this becomes a unique 'signature' pulse sequence for that system.

In one embodiment, when using a smartphone to make phone calls, typically a proximity sensor is used to detect whether the device is held against a caller's head (i.e., ear) or used in hands-free mode. Based on the proximity of the user's head, the screen is switched on/off to avoid accidental screen interaction when a user is holding the phone to his head.

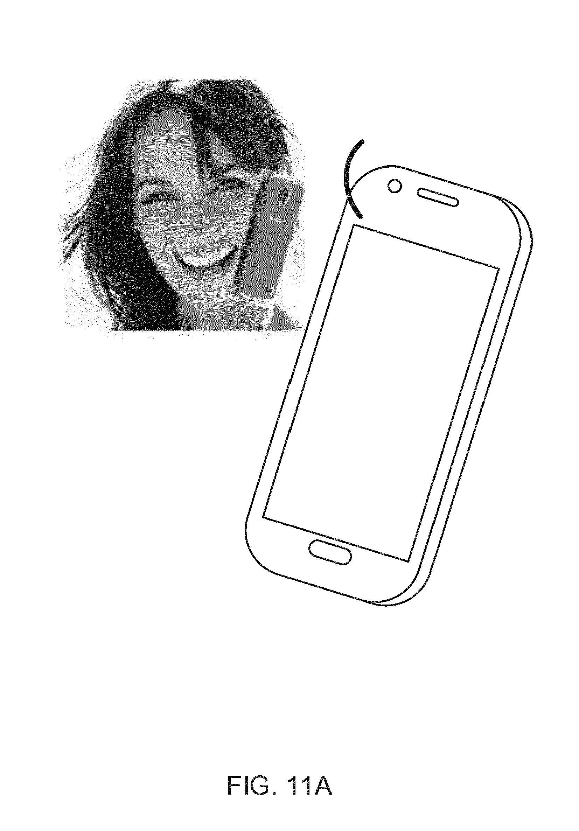

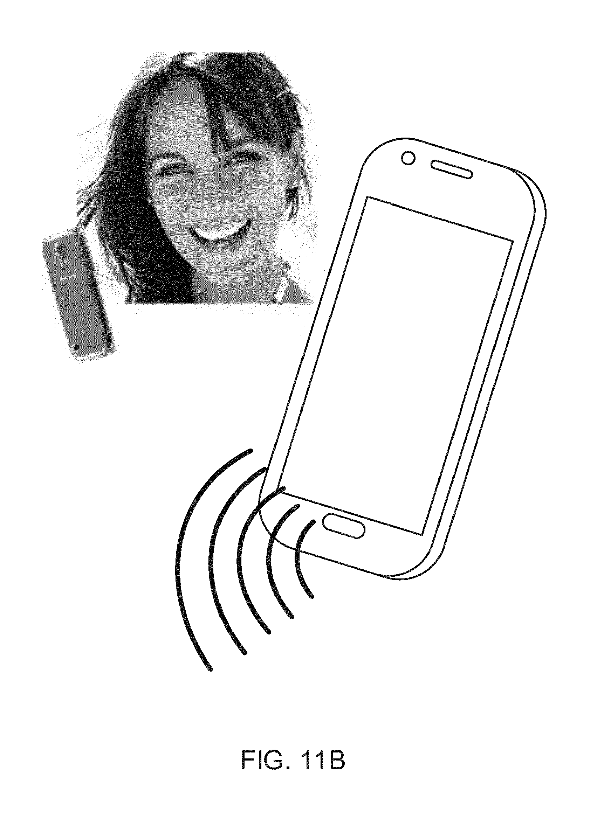

The disclosed system and method can use ultrasound to measure the echo path between the speaker and the microphone to detect the proximity of a user's head. Doing so, one may eliminate the need to include a proximity sensor in the device. Also, based on the same proximity sensing concept, an automatic switch can be included on which speaker and/or microphone is used for optimal performance. In the hands-free mode (i.e., device far away from user's ear), the low-impedance hands-free speaker can be used, which allows for high volume output (i.e., optimal for hands-free operation). When a good ear-fit is detected (i.e., device close to user's ear), the device can automatically switch to receiver speaker use, which has limited power. This is shown in FIGS. 11A and 11B. Accordingly, FIG. 11A shows a mobile phone using a receiver speaker when held near to the ear (i.e., "ear-fit" mode), while FIG. 11B shows a mobile phone using a hands-free speaker (higher output power) when held far from the ear (i.e., hands-free mode).

Next to automatically switching between speakers, there is also an automatic switch between microphones that can be made based on the same measurement. For example, in the use case where the device is close to the user (phone-to-ear), only the bottom microphone may be used, but when hands-free operation is detected, multiple microphones could be used to, for example, allow better suppression of ambient noise and thus improve conversation intelligibility.

In the "ear-fit" case, a measurement of the quality of the "ear-fit" may be made, which can be used to control volume and/or sound equalization for optimal sound rendering (e.g., constant perceived loudness or compensation of low-frequency losses for loose (suboptimal) "ear-fit").

With the present disclosure, automatic switching of speaker/microphones depending on the use case based on measurements made by those same components (i.e., the same speaker/microphones) avoids the need to exchange information/coordinate actions between multiple sensors (i.e., between audio speaker/microphone and proximity sensor). In the context of a chip, which already has access to both the microphone signal and the speaker signal, as well as the required processing power to identify the two use cases, the entire functionality of the disclosed system and method can be implemented within a single chip or apparatus.

The present disclosure uses components (speaker/microphone) already present in most existing mobile and wearable devices, and can even make some other components (e.g., proximity sensor) obsolete. Apart from making a sensor obsolete, the present disclosure also opens up the possibility of retrieving richer information: ultrasound echo measurements work on a longer distance than typical proximity sensors (5 cm maximum) and provide a straightforward distance measurement over that full range. This can then be used for volume control or other applications. Additionally, the present disclosure avoids the typical manual action needed currently to switch a phone between hands-free mode and ear-fit mode, scenarios for which different speakers, sound volumes and/or microphones are used.

The essential features of the present disclosure include:

(1) Using acoustic echo path analysis as a proximity detector;
(2) Automatic speaker/microphone selection and control based on proximity detection;
(3) Using measurements of components to optimize the use/performance of those same components, which avoids complex coordination/communication of information;
(4) Optimal use of speaker/microphone configuration determined based on measurements from those same components;
(5) Potential reduction of one typical component in mobile device (i.e., the proximity sensor).

The present disclosure relies on an acoustic echo path estimation between speaker and microphone for proximity detection. The implementation of this echo path estimation however, can be freely chosen. Some potential choices are:

(1) Echo estimation based on adaptive filtering used in Acoustic Echo Cancellation algorithms. This may be used, for example, when such algorithms are already in use during phone calls.
(2) Dedicated echo measurements using specific ultrasound pulse, such as described in FIGS. 1-10. This may be chosen when no AEC algorithm is in use on the device or if the required information from this algorithm is not available to the present disclosure, or if the echo path for proximity detection needs to be measured between a different speaker/microphone pair than the AEC speaker/microphones.

Acoustic echo path estimation can happen for any part of the audible or ultrasonic frequency range. Results will only have limited variation based on which frequency range is chosen.

As part of the algorithm, the direct echo path needs to be quantified. This is the echo between the speaker and the signal picked up by the microphone, which is always there, due to internal coupling in the phone (either electrically or acoustically). This part will not change depending on the proximity of the phone to the user's head.

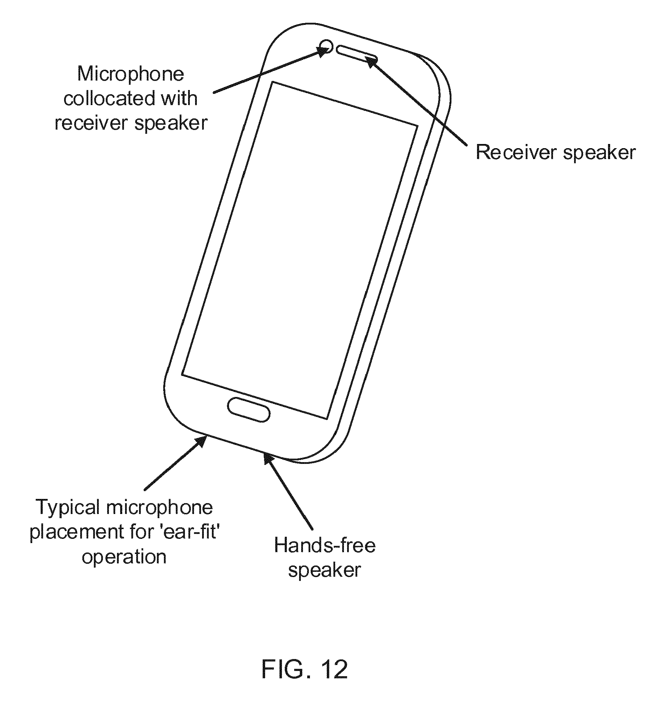

Once the 'static' echo has been subtracted from the total measured echo, the remaining echo path (caused by acoustic reflection on the environment, e.g. the user's face/ear) must be classified to differentiate between ear-fit and hands-free mode. One potential classification feature is the total energy in the echo. The decision criterion is dependent on the speaker-microphone configuration (see FIG. 12):

(1) When using a collocated speaker and microphone (e.g., the receiver speaker and a microphone placed next to it), the echo energy will be high in the ear-fit case, since the ear/head will then close the speaker/microphone opening in the phone and redirect all speaker energy towards the microphone.

(2) If the receiver speaker is used for the echo path estimation, but a microphone at the bottom of the phone is used (the placement typically used for recording speech in a normal ear-fit use of the phone), the echo energy will be very low in the ear-fit case, since the head will now block most of the acoustic coupling between the receiver speaker and the bottom microphone, by closing the speaker opening on the device.

FIG. 12 shows a typical smartphone speaker and microphone placements and naming. In FIG. 12, the receiver speaker is located near the top of the smartphone, while the hands-free speaker is located near the bottom of the smartphone. Further, one microphone (collocated with receiver speaker) is located near the top of smartphone, while a typical microphone placement for 'ear-fit' operation is located near the bottom of the smartphone.

As an extension to the binary classification of the echo energy into "ear-fit" or hands-free mode, the original measurement of the echo energy can be used as a measure for the quality of the 'ear-fit' between the speaker and the ear. For example, in the case of a collocated speaker and microphone, the tighter the fit of the phone to the ear, the more energy would be reflected back from the speaker to the microphone (since a tight fit would reduce the 'loss' of sound pressure level into the environment). For the situation where a receiver speaker and a bottom microphone are used, a lower echo energy would indicate a tighter 'ear-fit'.

Using that information, one can control the volume used for audio play back, or adapt sound equalization according to the known differences in frequency coupling between a loose and a tight ear fit.

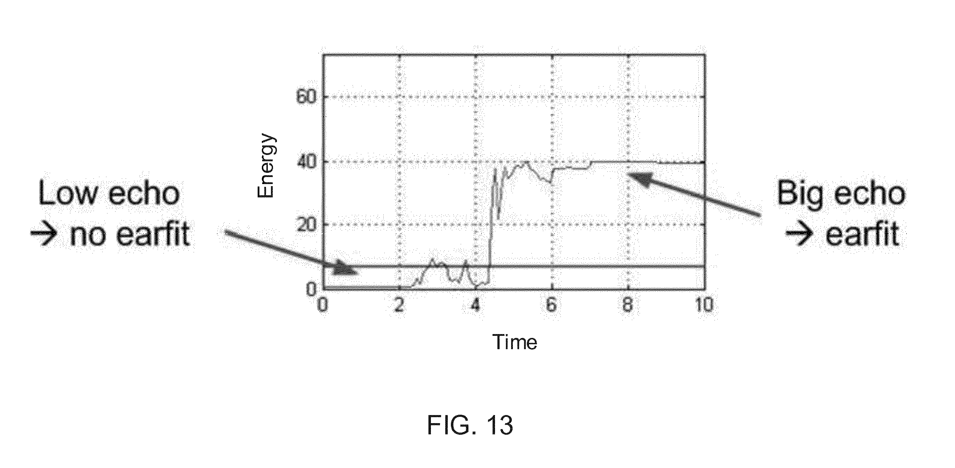

FIG. 13 shows the echo energy based 'ear-fit' classification for collocated (receiver) speaker and microphone. Here, because the speaker and microphone are collocated, the tighter the fit of the phone to the ear, the more energy would be reflected back from the speaker to the microphone (since a tight fit would reduce the 'loss' of sound pressure level into the environment). As such, a low echo indicates no 'ear-fit' (i.e., hands-free mode), while a big echo indicates "ear-fit' (i.e., ear-fit mode).

The concept of the present disclosure can be used in any portable device which can be used to set-up voice communication in both hands-free and 'ear-fit' mode.

The present disclosure focuses on using one microphone and one speaker, but the concepts described can be generalized and potentially made more robust through the use of multiple speakers and/or multiple microphones. By measuring the different echo paths between the different speaker-microphone pairs, potentially a more detailed or more robust classification can be done of the distance between device and user.

The concept of earfit-quality based volume control and/or equalization can be used in any portable device which is used for close-to-the-ear or in-ear sound rendering (e.g., headphones), potentially using the speaker in the device as a microphone instead of an actual separate microphone.

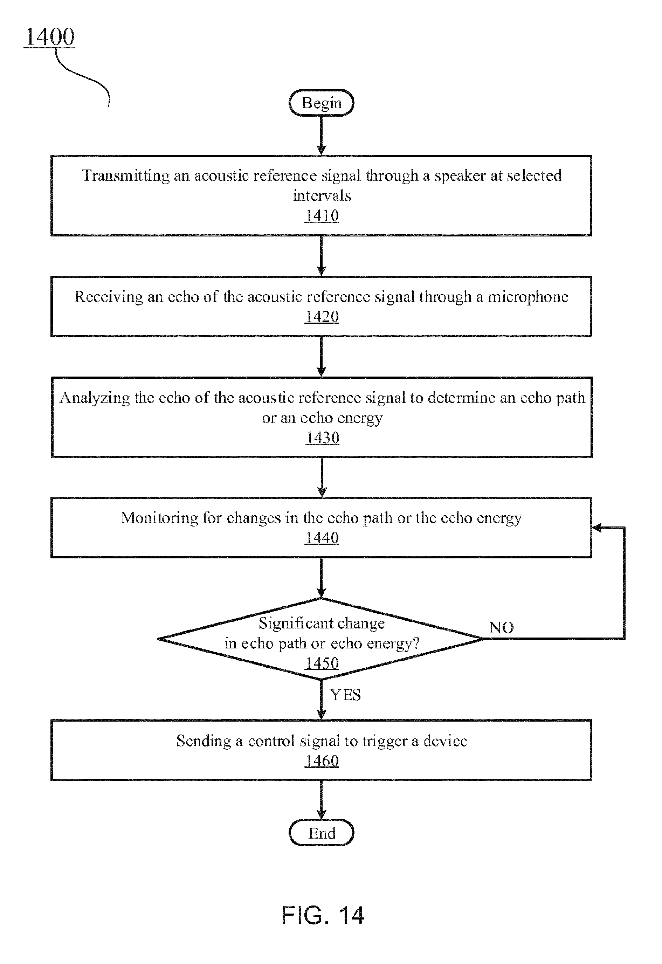

FIG. 14 shows a flow chart of method steps that uses acoustic echo to trigger a device, in accordance with some example embodiments. As shown in FIG. 14, the method 1400 begins at step 1410, where the method transmits an acoustic reference signal through a speaker at selected intervals. Then, at step 1420, the method receives an echo of the acoustic reference signal through a microphone. Next, at step 1430, the method analyzes the echo of the acoustic reference signal to determine an echo path or an echo energy. Continuing to step 1440, the method monitors for changes in the echo path or the echo energy. Then, at step 1450, the method checks if there is a significant change in the echo path or the echo energy. If the method does not identify a significant change in the echo path or the echo energy, then the method returns to step 1440, where the method continues to monitor for changes in the echo path or the echo energy. If, however, the method does identify a significant change in the echo path or the echo energy, then the method continues to step 1460, where the method sends a control signal to trigger the device.

A first example of an ultrasound echo use case is gesture activation. Here, an ultrasonic pulse is played through a speaker of a device. An echo is picked up by a microphone of the device. The echo path is constantly monitored. As a hand approaches the device, the echo changes. A change in the echo path activates the device. A low power operation (< 1 mA) allows 'always-on' operation.

A second example of an ultrasound echo use case is "ear-fit" detection. Here, an ultrasonic pulse is played through a speaker of a device. An echo is picked up by a microphone of the device. The echo is constantly monitored. As a user holds the device to the ear, there is significant increase in echo pick-up. Echo energy is used to detect "ear-fit". Here, existing components (i.e., speaker and microphone) are used to replace a proximity sensor. There is auto-switching between hands-free speaker and receiver speaker based on "ear-fit" detection. There is also auto-switching of screen on/off based on "ear-fit" detection.

In some example embodiments the instructions described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the instructions illustrated herein and data and instructions associated therewith are stored in respective storage devices, which are implemented as one or more non-transient machine or computer-readable or computer-usable storage media or mediums. Such computer-readable or computer-usable storage medium or media is (are) considered to be part of an article (or article of manufacture). An article or article of manufacture can refer to any manufactured single component or multiple components. The non-transient machine or computer-usable media or mediums as defined herein excludes signals, but such media or mediums may be capable of receiving and processing information from signals and/or other transient mediums. The storage media include different forms of memory including semiconductor memory devices such as DRAM, or SRAM, Erasable and Programmable Read-Only Memories (EPROMs), Electrically Erasable and Programmable Read-Only Memories (EEPROMs) and flash memories; magnetic disks such as fixed, floppy and removable disks; other magnetic media including tape; and optical media such as Compact Disks (CDs) or Digital Versatile Disks (DVDs).

In one example, one or more blocks or steps discussed herein are automated. In other words, apparatus, systems, and methods occur automatically. The terms automated or automatically (and like variations thereof) mean controlled operation of an apparatus, system, and/or process using computers and/or mechanical/electrical devices without the necessity of human intervention, observation, effort and/or decision.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Embodiments may include features recited in the following numbered clauses:

1. A method that uses acoustic echo to trigger a device, the method comprising:

transmitting an acoustic reference signal through a speaker at selected intervals;
receiving an echo of the acoustic reference signal through a microphone;
analyzing the echo of the acoustic reference signal to determine an echo path or an echo energy;
monitoring for changes in the echo path or the echo energy; and
in response to identifying a significant change in the echo path or the echo energy, sending a control signal to trigger the device.

2. The method of clause 1, wherein the acoustic reference signal is an ultrasonic reference signal.

3. The method of clause 2, wherein the control signal triggers the device to make a switch in a power level of the device.

4. The method of clause 3, wherein the significant change in the echo path is associated with a body part of a user moving relative to the device.

5. The method of clause 4, wherein triggering the device to make the switch in the power level of the device comprises:

triggering the device to switch from a low power mode to a high power mode.

6. The method of clause 5,
wherein the low power mode is a "device off" state or a power saving standby state, and
wherein the high power mode is a "device on" state or a high power state that has more functionalities turned on.

7. The method of clause 2, wherein the ultrasonic reference signal is a reference pulse with good autocorrelation properties.

8. The method of clause 7, wherein the reference pulse with good autocorrelation properties is optimally detectable in noise when the reference pulse is a low power pulse.

9. The method of clause 8, wherein the step of analyzing the echo of the acoustic reference signal to determine the echo path or the echo energy is optimized by adjusting one or more of the following parameters:

> pulse duration,
> pulse frequency bandwidth,
> pulse loudness,
> listening window, and
> pulse interval.

10. The method of clause 8, wherein an expected timing of the echo is used to determine an optimized listening window and pulse interval.

11. The method of clause 2, wherein the control signal triggers the device to make an automatic speaker/microphone selection and control based on the identified significant change in the echo energy.

12. The method of clause 11, wherein the identified significant change in the echo energy indicates a low echo energy that is associated with the device being far away from a user's ear so that this is a "hands-free" mode and the device automatically switches to using a "hands-free" speaker/microphone selection and control.

13. The method of clause 11, wherein the identified significant change in the echo energy indicates a high echo energy that is associated with the device being close to a user's ear so that this is an "ear-fit" mode and the device automatically switches to using an "ear-fit" speaker/microphone selection and control.

14. The method of clause 7, wherein the reference pulse is sent in a unique and/or randomized sequence to allow different devices to coexist, wherein the device only reacts to pulses the device identifies as its own.

15. The method of clause 2, wherein the significant change is identified through an automatic dynamic threshold calculation.

16. An apparatus that uses acoustic echo to trigger a device, the apparatus comprising:

> an output configured for transmitting an acoustic reference signal at selected intervals by coupling to a speaker;
an input configured for receiving an echo of the acoustic reference signal by coupling to a microphone; and
a processor configured for:

> analyzing the echo of the acoustic reference signal to determine an echo path or an echo energy,
> monitoring for changes in the echo path or the echo energy, and
> in response to identifying a significant change in the echo path or the echo energy, sending a control signal to trigger the device.

17. The apparatus of clause 16, wherein the acoustic reference signal is an ultrasonic reference signal.

18. The apparatus of clause 17, wherein the control signal triggers the device to make a switch in a power level of the device based on the identified significant change in the echo path.

19. The apparatus of clause 18, wherein the control signal triggers the device to make an automatic speaker/microphone selection and control based on the identified significant change in the echo energy.

20. A computer program product encoded in a non-transitory computer readable medium for using ultrasonic echo to trigger a device, the computer program product comprising:

> computer code for transmitting an ultrasonic reference signal through a speaker at selected intervals;
> computer code for receiving an echo of the ultrasonic reference signal through a microphone;
> computer code for analyzing the echo of the ultrasonic reference signal to determine an echo path or an echo energy;
> computer code for monitoring for changes in the echo path or the echo energy; and
> computer code for, in response to identifying a significant change in the echo path or the echo energy, sending a control signal to trigger the device.

Herein is described systems and methods that provide for low-power monitoring of the acoustic echo path around a device to enable device triggering based on activity detection in the environment. An ultrasonic (or more generally an acoustic) reference signal is played through a speaker at well-chosen intervals and its echoes recorded through a microphone. The recorded signal is analyzed to obtain an estimation of the total echo path or echo energy. By monitoring this estimation variation, significant changes in the echo path or echo energy can be identified and used as a trigger. In one embodiment, a hand approaching a phone changes the echo path, activating the phone to a power on mode. In another embodiment, a user using a phone close to the ear changes the echo energy, triggering the phone to select the "ear-fit" mode speaker/microphone.

The various aspects, embodiments, implementations or features of the described embodiments can be used separately or in any combination. Various aspects of the described embodiments can be implemented by software, hardware or a combination of hardware and software. Some of the described embodiments can also be embodied as computer readable code on a non-transitory computer readable medium. The computer readable medium is defined as any data storage device that can store data which can thereafter be read by a computer system. Examples of the computer readable medium include read-only memory, random-access memory, CD-ROMs, HDDs (hard disk drives), SSDs (solid-state drives), DVDs, magnetic tape, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

**Claims**

1. A method that uses acoustic echo to trigger a device, the method comprising:

   transmitting an acoustic reference signal through a speaker at selected intervals;
   receiving an echo of the acoustic reference signal through a microphone;
   analyzing the echo of the acoustic reference signal to determine an echo path or an echo energy;
   monitoring for changes in the echo path or the echo energy; and
   in response to identifying a significant change in the echo path or the echo energy, sending a control signal to trigger the device.

2. The method of claim 1, wherein the acoustic reference signal is an ultrasonic reference signal.

3. The method of claim 1 or 2, wherein the control signal triggers the device to make a switch in a power level of the device.

4. The method of any preceding claim, wherein the significant change in the echo path is associated with a body part of a user moving relative to the device.

5. The method of any preceding claim, wherein triggering the device to make the switch in the power level of the device comprises:

   triggering the device to switch from a low power mode to a high power mode.

6. The method of claim 5,
   wherein the low power mode is a "device off" state or a power saving standby state, and
   wherein the high power mode is a "device on" state or a high power state that has more functionalities turned on.

7. The method of any preceding claim, wherein the step of analyzing the echo of the acoustic reference signal to determine the echo path or the echo energy is optimized by adjusting one or more of the following parameters:

   pulse duration,
   pulse frequency bandwidth,
   pulse loudness,
   listening window, and
   pulse interval.

8. The method of any preceding claim, wherein the control signal triggers the device to make an automatic speaker/microphone selection and control based on the identified significant change in the echo energy.

9. The method of claim 8, wherein the identified significant change in the echo energy indicates a low echo energy that is associated with the device being far away from a user's ear so that this is a "hands-free" mode and the device automatically switches to using a "hands-free" speaker/microphone selection and control.

10. The method of claim 8, wherein the identified significant change in the echo energy indicates a high echo energy that is associated with the device being close to a user's ear so that this is an "ear-fit" mode and the device automatically switches to using an "ear-fit" speaker/microphone selection and control.

11. The method of any of claims 2 to 10,
    wherein the ultrasonic reference signal comprises a unique and/or randomized sequence of reference pulses to allow different devices to coexist,

wherein the device only reacts to pulses the device identifies as its own.

12. The method of any claims 2 to 11, wherein the significant change is identified through an automatic dynamic threshold calculation.

13. An apparatus that uses acoustic echo to trigger a device, the apparatus comprising:

an output configured for transmitting an acoustic reference signal at selected intervals by coupling to a speaker;
an input configured for receiving an echo of the acoustic reference signal by coupling to a microphone; and
a processor configured for:

analyzing the echo of the acoustic reference signal to determine an echo path or an echo energy,
monitoring for changes in the echo path or the echo energy, and
in response to identifying a significant change in the echo path or the echo energy, sending a control signal to trigger the device.

14. The apparatus of claim 13, wherein the acoustic reference signal is an ultrasonic reference signal.

15. The apparatus of claim 13 or 14, wherein the control signal triggers the device to make a switch in a power level of the device based on the identified significant change in the echo path.

100

110

120

FIG. 1A

FIG. 1B

FIG. 1C

FIG. 2

310 Ultrasound pulse generation

320 Audible sound

330

FIG. 3

FIG. 4

FIG. 5

FIG. 6

Pulse autocorrelation
710

Amplitude envelope
720

Matched filtering on
echoes + noise
730

Echoes       Noise
740         750

FIG. 7

Detection of significant change 830

Adaptive threshold 820

Consecutive echo deltas over time 810

FIG. 8

**FIG. 9A**

Single-Sided Amplitude Spectrum

|Y(f)| (dB)

Frequency (Hz)

**FIG. 9B**

Magnitude Response (dB)

Magnitude (dB)

Normalized Frequency (pi rad/sample)

FIG. 10

FIG. 11A

FIG. 11B

Microphone
collocated with
receiver speaker

Receiver speaker

Typical microphone
placement for 'ear-fit'
operation

Hands-free
speaker

FIG. 12

FIG. 13

1400

```
                          ( Begin )
                              |
                              v
+------------------------------------------------------------+
|  Transmitting an acoustic reference signal through a       |
|  speaker at selected intervals                             |
|                      1410                                  |
+------------------------------------------------------------+
                              |
                              v
+------------------------------------------------------------+
|  Receiving an echo of the acoustic reference signal        |
|  through a microphone                                      |
|                      1420                                  |
+------------------------------------------------------------+
                              |
                              v
+------------------------------------------------------------+
|  Analyzing the echo of the acoustic reference signal to    |
|  determine an echo path or an echo energy                  |
|                      1430                                  |
+------------------------------------------------------------+
                              |
                              v
+------------------------------------------------------------+
|  Monitoring for changes in the echo path or the echo       |
|  energy                                                    |
|                      1440                                  |
+------------------------------------------------------------+
                              |
                              v
                    /  Significant change  \        NO
                   <  in echo path or echo  >-----------
                    \  energy?  1450       /
                              |
                            YES
                              v
+------------------------------------------------------------+
|  Sending a control signal to trigger a device             |
|                      1460                                  |
+------------------------------------------------------------+
                              |
                              v
                          ( End )
```

FIG. 14